# EUROPÄISCHE PATENTANMELDUNG

(11) **EP 2 385 269 A2**
(43) Veröffentlichungstag der Anmeldung: **09.11.2011**
(21) Anmeldenummer: 11160108.4
(22) Anmeldetag: 29.03.2011
(51) Int. Cl.: F16F 9/05

(54) **Luftfederanordnung für ein Nutzfahrzeug**

(30) Priorität: 04.05.2010 DE 102010016768
(71) Anmelder: ContiTech Luftfedersysteme GmbH, 30165 Hannover (DE)
(72) Erfinder: Stahmer, Reinhard, 30823, Garbsen (DE); Balachonzew, Boris, 30823, Garbsen (DE)
(74) Vertreter: Finger, Karsten

(57) **Zusammenfassung**

Luftfederanordnung mit einer Luftfeder (1) für ein Nutzfahrzeug mit einem Rahmen (3), wobei die Luftfeder (1) einen Abrollbalg (2), einen Abrollkolben und einen Deckel (4) aufweist, wobei der Deckel (4) in seinem Boden (7) Sicken (8) aufweist und mittels eines Befestigungswinkels (10) an dem Nutzfahrzeugrahmen (3) befestigbar ist. Die zu lösende Aufgabe ist eine biegesteife und verdreh- und verschiebesichere Verbindung zum Nutzfahrzeugrahmen. Dies wird durch einen Befestigungswinkel (10) gelöst, der an seinem dem Deckel (4) zugeordneten Schenkel (11) eine Kontur (12) aufweist, die mit der Kontur der Sicken (8) des Deckelbodens (7) korrespondiert und derart in die Kontur der Sicken (8) des Deckelbodens (7) einpassbar ist, dass in eingebautem Zustand des Winkels (10) an dem Deckel (4) ein Formschluss zwischen dem Winkel (10) und dem Deckel (4) erreichbar ist.

## Beschreibung

Die Erfindung betrifft eine Luftfederanordnung mit einer Luftfeder für ein Nutzfahrzeug mit einem Rahmen, wobei die Luftfeder einen Abrollbalg, einen Abrollkolben und einen Deckel mit einem Boden und Befestigungsmitteln aufweist, wobei der Deckel im Boden Sicken aufweist und mittels eines Befestigungswinkels an dem Nutzfahrzeugrahmen befestigbar ist.

Derartige Luftfedern sind an sich bekannt. Die Luftfeder ist üblicherweise mittels der am Deckel angebrachten Befestigungsmittel, wie beispielsweise Winkel, am Rahmen oder an Rahmenteilen eines Kraftfahrzeugs befestigbar. Da die Rahmenteile oder Rahmen in eingebautem Zustand der Luftfeder meist nicht die gesamte Deckelfläche überdecken, ist der Deckel teilweise erheblichen Biegekräften ausgesetzt. Die Versteifungssicken sollen verhindern, dass sich der Deckel dabei plastisch verformt und damit den Ausfall der Luftfeder herbeiführt.

Um jedoch die Überdeckungsfläche zwischen Rahmenteil und Deckel nicht unnötig zu verringern, sind die Versteifungssicken meist derart angeordnet, dass die Überdeckungsfläche weitgehend von den genannten Sicken frei ist. Eine derartige Luftfeder ist in der DE 295 10 199 U1 offenbart.

Die Befestigungsart des Deckels mittels Winkel ist meist derart ausgeführt, dass der Deckel an dem Winkel und der Winkel seinerseits am Rahmen des Nutzfahrzeugs befestigbar ist. Bei unsymmetrischer Anordnung der Luftfeder zum Rahmenteil, die aufgrund der bestmöglichen Ausnutzung des zur Verfügung stehenden Einbauraumes der Luftfeder nicht immer vermeidbar ist, kommt es zusätzlich zu den Biegebelastungen für den Deckel auch zu teilweise nicht unerheblichen Torsions- oder Verschiebekräften. Diese müssen dann bei den bekannten Luftfedern meist durch die Befestigungselemente abgefangen werden. Zwar sind auch mit dem Deckel stoffschlüssige Befestigungswinkel bekannt, jedoch aufgrund der verschiedenen Einbausituationen nicht immer einsetzbar.

Der Erfindung liegt die Aufgabe zugrunde, eine Luftfeder der eingangs geschilderten Art zu schaffen, die eine Biegesteife und verdreh- und verschiebesichere Verbindung zum Nutzfahrzeugrahmen ermöglicht.

Die Aufgabe wird dadurch gelöst, dass der Befestigungswinkel an seinem dem Deckel zugeordneten Schenkel eine Kontur aufweist, die mit der Kontur der Sicken des Deckelbodens korrespondiert und derart in die Kontur der Sicken des Deckelbodens einpassbar ist, dass in eingebautem Zustand des Winkels an dem Deckel ein Formschluss zwischen dem Winkel und dem Deckel erreichbar ist.

Die erfindungsgemäße Ausführung ermöglicht eine verdrehsichere Anbringung des Deckels an den Winkel. Ein Ausrichten der Luftfeder während des Einbaus ist stark vereinfacht, da die Einbaulage durch den Formschluss zwischen Deckel und Winkel vorgegeben ist. Damit ist auch eine falsche Montage stark erschwert. Da die Verdreh- oder Schubkräfte größtenteils durch den Formschluss abgefangen werden, sind die Befestigungsmittel in Anzahl und/oder Festigkeit reduzierbar.

Eine sickenfreie Überdeckungsfläche zwischen dem Winkel und dem Deckel ist nicht erforderlich. Dadurch können Lage und Form der Sicken frei gestaltet werden.

In einer Weiterbildung der Erfindung sind die Sicken im Deckel derart angeordnet, dass sie gegenüber dem Deckelboden nach außerhalb der Luftfeder gerichtet aus dem Boden des Deckels herausragen und zum Rand des Deckels hin nicht miteinander verbunden sind.

Damit ist sichergestellt, dass sich im Boden des Deckels keine geschlossenen Vertiefungen bilden, in denen sich Schmutz und Wasser sammeln.

Anhand der Zeichnung wird nachstehend ein Beispiel der Erfindung näher erläutert.

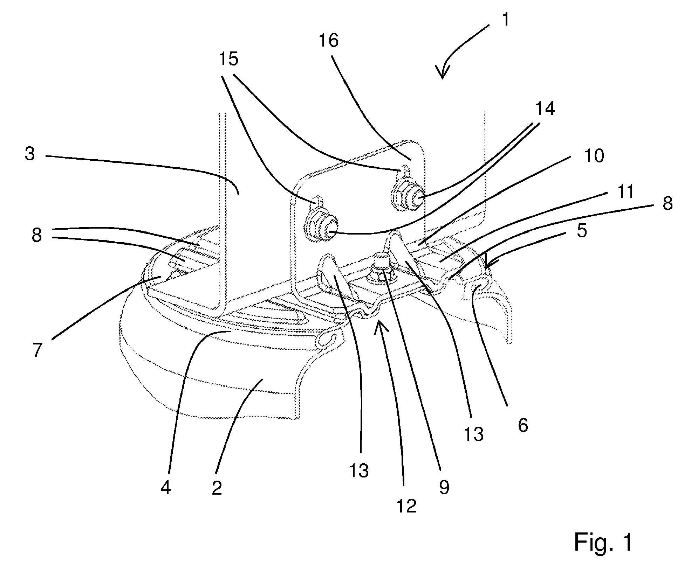

In Figur 1 ist ein Teilschnitt einer erfindungsgemäßen Luftfederanordnung in perspektivischer Darstellung gezeigt. Die Luftfederanordnung weist eine Luftfeder 1 und einen Balg 2 auf, der hier nur teilweise gezeigt ist. Ein Abrollkolben ist zur besseren Übersicht hier nicht dargestellt. Der Balg 2 ist an seinem oberen, einem hier nur teilweise dargestellten Fahrzeugrahmen 3 zugewandten Ende mit einem Deckel 4 luftdicht abgeschlossen. Die Verbindung zwischen Deckel 4 und Balg 2 ist durch eine Verbördelung 5 des Deckels 4 um einen Wulst 6 des Balges 2 gebildet.

Der Deckel 4 weist einen Boden 7 auf, wobei der Boden 7 Sicken 8 aufweist, die in Richtung auf den Rahmen 3 aus dem Deckelboden 7 herausragen. Der Deckel 4 ist mittels einer Schrauben-Mutter-Verbindung 9 an einem Winkel 10 befestigt. Der Winkel 10 weist an seinem dem Deckel 4 zugeordneten Schenkel 11 eine Kontur 12 auf, die mit den Sicken 8 des Deckelbodens 7 korrespondiert und in diese hineingreift. Der Winkel 10 weist zur Verbesserung der Steifigkeit noch Eckstreben 13 auf, die, wie die Kontur 12, durch einen spanlosen Umformvorgang erzeugbar sind.

Der Winkel 10 ist mit Schrauben-Muttern-Verbindungen 14 an dem Rahmen 3 befestigt. Die Befestigung des Winkels 10 am Rahmen 3 erfolgt über Langlöcher 15 in den dem Rahmen 3 zugeordneten Schenkel 16 des Winkels 10, so dass eine Justierung des Sitzes des Winkels 10 am Rahmen 3 möglich ist.

Dadurch, dass die Kontur 12 des Winkels 10 in die Sicken 8 des Deckelbodens 7 eingreift, ist der Deckel 4 und damit die gesamte Luftfeder 1 gegen Verdrehung gegenüber dem Rahmen 3 gesichert. Es ist dafür nur eine einzige Schrauben-Mutter-Verbindung 9 notwendig.

### Bezugszeichenliste

### (Teil der Beschreibung)

- 1: Luftfeder
- 2: Balg der Luftfeder 1
- 3: Fahrzeugrahmen
- 4: Deckel am Balg 2
- 5: Verbördelung
- 6: Wulst des Balges 2
- 7: Boden des Deckels 4
- 8: Sicken im Deckelboden 7
- 9: Schraube-Mutter-Verbindung
- 10: Winkel
- 11, 16: Schenkel des Winkels 10
- 12: Kontur des Schenkels 11
- 13: Eckstreben
- 14: Schrauben-Muttern-Verbindungen
- 15: Langlöcher im Schenkel 16

## Patentansprüche

1. Die Erfindung betrifft eine Luftfederanordnung mit einer Luftfeder (1) für ein Nutzfahrzeug mit einem Rahmen (3), wobei die Luftfeder (1) einen Abrollbalg (2), einen Abrollkolben und einen Deckel (4) mit einem Boden (7) und Befestigungsmittel (9, 14) aufweist, wobei der Deckel (4) im Boden (7) Sicken (8) aufweist und mittels eines Befestigungswinkels (10) an dem Nutzfahrzeugrahmen (3) befestigbar ist, **dadurch gekennzeichnet, dass** der Befestigungswinkel (10) an seinem dem Deckel (4) zugeordneten Schenkel (11) eine Kontur (12) aufweist, die mit der Kontur der Sicken (8) des Deckelbodens (7) korrespondiert und derart in die Kontur der Sicken (8) des Deckelbodens (7) einpassbar ist, dass in eingebautem Zustand des Winkels (10) an dem Deckel (4) ein Formschluss zwischen dem Winkel (10) und dem Deckel (4) erreichbar ist.

2. Luftfederanordnung nach Anspruch 1, **dadurch gekennzeichnet, dass** die Sicken (8) im Deckelboden (7) derart angeordnet sind, dass sie gegenüber dem Deckelboden (7) nach außerhalb der Luftfeder (1) gerichtet aus dem Boden (7) des Deckels (4) herausragen und zum Rand des Deckels (4) hin nicht miteinander verbunden sind.
